# EUROPÄISCHE PATENTSCHRIFT

(11) **EP 3 577 568 B1**
(45) Veröffentlichungstag und Bekanntmachung des Hinweises auf die Patenterteilung: **23.02.2022**
(21) Anmeldenummer: 18758875.1
(22) Anmeldetag: 22.08.2018
(51) Int. Cl.: G06F 13/40, G06F 21/85, H04L 29/06

(54) **VERFAHREN ZUM FILTERN VON ÜBER EINE KOMMUNIKATIONSVERBINDUNG EINGEHENDEN KOMMUNIKATIONSDATEN IN EINER DATENVERARBEITUNGSEINRICHTUNG, DATENVERARBEITUNGSEINRICHTUNG UND KRAFTFAHRZEUG**
METHOD FOR FILTERING COMMUNICATION DATA ARRIVING VIA A COMMUNICATION CONNECTION IN A DATA PROCESSING DEVICE, DATA PROCESSING DEVICE AND MOTOR VEHICLE
PROCÉDÉ DE FILTRAGE DE DONNÉES DE COMMUNICATION ENTRANTES AU MOYEN D'UNE LIAISON DE COMMUNICATION DANS UN DISPOSITIF DE TRAITEMENT DE DONNÉES, DISPOSITIF DE TRAITEMENT DE DONNÉES ET VÉHICULE À MOTEUR

(30) Priorität: 22.08.2017 DE 102017214624
(43) Veröffentlichungstag der Anmeldung: 11.12.2019
(73) Patentinhaber: Audi AG, 85045 Ingolstadt (DE)
(72) Erfinder: AHN, Changsup, 85057 Ingolstadt (DE); ZAWADZKI, Kamil, 81827 München (DE); KLEIN, Markus, 85104 Pförring (DE); GRUBER, Hans-Georg, 85049 Ingolstadt (DE)
(86) Internationale Anmeldenummer: PCT/EP2018/072629
(87) Internationale Veröffentlichungsnummer: WO 2019/038317

(56) Entgegenhaltungen:
- EP-A1- 2 983 088
- DE-A1-102012 017 339
- DE-B3-102005 055 419
- Microchip Technology Inc.: "Microchip MCP2515", , 31 May 2003 (2003-05-31), pages 1-94, XP055670776, Retrieved from the Internet: URL:http://ww1.microchip.com/downloads/en/ DeviceDoc/MCP2515-Stand-Alone-CAN-Controll er-with-SPI-20001801J.pdf [retrieved on 2020-02-21]

## Beschreibung

Die Erfindung betrifft ein Verfahren zum Filtern von über eine Kommunikationsverbindung, die Zugriff auf wenigstens ein Speichermittel einer empfangenden Datenverarbeitungseinrichtung gewährt, von einem Kommunikationspartner eingehenden Kommunikationsdaten in der Datenverarbeitungseinrichtung, eine Datenverarbeitungseinrichtung und ein Kraftfahrzeug.

Moderne Datenverarbeitungssysteme als Teil von Gesamtvorrichtungen, beispielsweise Kraftfahrzeugen, nehmen an Komplexität heutzutage mit den steigenden Anforderungen an die Leistungsfähigkeit dieser Datenverarbeitungssysteme sowie die technologischen Möglichkeiten zur Optimierung dieser Datenverarbeitungssysteme zu. Dabei finden zunehmend Techniken, die auch für handelsübliche Personalcomputer eingesetzt werden, auch in anderen Gesamtvorrichtungen, beispielsweise Kraftfahrzeugen, Anwendung. Derartige Techniken umfassen auch insbesondere paketbasierte Punkt-zu-Punkt-Kommunikationsstandards, insbesondere den PCI Express-Kommunikationsstandard (PCIe-Kommunikationsstandard), der üblicherweise eingesetzt wird, um beispielsweise in einem Personalcomputer Peripherieeinrichtungen mit einem Chipsatz zu verbinden. PCI Express stellt eine der schnellsten verfügbaren Kommunikationsmethoden dar. Typische Anwendungsfälle für PCI Express sind Anwendungen, in denen große Datenmengen in äußerst kurzen Zeiten verarbeitet und/oder übertragen werden müssen. Um Verbindungen beispielsweise zwischen einem Chipsatz und mehreren Peripherieeinrichtungen herzustellen, ist es bekannt, Brückeneinrichtungen zwischenzuschalten, die beispielsweise als Multiplexer, Switch oder dergleichen ausgebildet sein können. Derartige Brückeneinrichtungen können "transparent" oder "nicht-transparent" sein, mithin unmittelbar als Kommunikationspartner wirken oder aber eine über die Brückeneinrichtung erreichbare Datenverarbeitungseinrichtung als unmittelbaren Kommunikationspartner erscheinen lassen. Eine Vielzahl verschiedener Architekturen sind möglich und bekannt.

Bei Kommunikationsstandards wie PCI Express erhalten die Kommunikationspartner üblicherweise unmittelbaren Zugriff auf Speichermittel und Recheneinheiten der mit ihnen kommunizierenden Datenverarbeitungseinrichtungen. Dies gilt auch dann, wenn Gesamtvorrichtungen bzw. deren Datenverarbeitungssysteme sicherheitskritische Anteile aufweisen, welche mit weniger sicherheitskritischen Bereichen kommunizieren sollen. Beispielsweise ist es Kraftfahrzeugen bekannt, Fahrt- und/oder sicherheitssystembezogene Steuergeräte, insbesondere auch im Hinblick auf autonomes Fahren, als Datenverarbeitungseinrichtungen als eher sicherheitskritische Datenverarbeitungseinrichtungen anzusehen, welche mithin einem Sicherheitsbereich zuzuordnen sind, der dennoch mit weniger sicherheitskritisch eingeordneten Datenverarbeitungseinrichtungen, insbesondere weiteren Steuergeräten, kommunizieren soll.

Das Vorsehen einer bidirektionalen Verbindung, die Zugriff auf Speichermittel und/oder Recheneinheiten in der sicherheitskritischen Datenverarbeitungseinrichtung erlaubt, würde jedoch weniger sicherheitskritisch eingestuften Datenverarbeitungseinrichtungen als Kommunikationspartner erlauben, Manipulationen innerhalb der sicherheitskritischen Datenverarbeitungseinrichtung vorzunehmen, beispielsweise dann, wenn der weniger sicherheitskritische Kommunikationspartner gehackt bzw. ersetzt worden ist und/oder die Kommunikationsdaten bei der Übertragung über die Kommunikationsverbindung manipuliert wurden.

Der einfachste vorstellbare Weg zur Verhinderung einer derartigen Motivation wäre das Vorsehen lediglich einer monodirektionalen Verbindung aus dem Sicherheitsbereich zu den weniger sicherheitskritischen Kommunikationspartnern. Eine solche Lösung wäre zwar sicher, ist jedoch nicht realistisch, da Anordnungen ohne einen Rückkanal nicht sinnvoll gesteuert/verwaltet werden können. Die Einsetzbarkeit eines solchen Ansatzes ist mithin als eher beschränkt zu bewerten.

In einem anderen Ansatz wäre es denkbar, einen stark eingeschränkten Rücckanal von weniger sicherheitskritischen Kommunikationspartnern zu der sicherheitskritischen Datenverarbeitungseinrichtung vorzusehen, die die Angriffsmöglichkeiten auf der sicherheitskritischen Seite einschränken. Beispielsweise können lediglich Bestätigungssignale ohne jegliche Nutzdaten erhalten werden. Allerdings muss eine derartige Limitation als getrennte Hardware realisiert werden, was aufwändig ist, und die Funktionalität des Rückkanals ist stark eingeschränkt.

In DE 10 2005 055 419 B3 wird eine Doppelschnittstellenvorrichtung beschrieben, welche unter anderem als Filter in Kommunikationsnetzwerken eingesetzt werden kann. Die Doppelschnittstellenvorrichtung besteht dabei aus zwei miteinander verbundenen, portablen Datenträgern, welche jeweils einen Ausgang oder einen Eingang der Doppelschnittstellenvorrichtung bildende externe Hardwareschnittstellen umfassen. Die beiden portablen Datenträger sind weiterhin jeweils über einen zusätzlichen, bei der bestimmungsgemäßen Verwendung des Datenträgers nicht genutzten Hardwareanschluss miteinander verbunden. Die auf diese Weise gebildete Doppelschnittstellenvorrichtung kann zur sicherheitskritischen Prüfung eines Datenverkehrs durch Filterung eines Datenstroms eingesetzt werden. Dabei filtert die Doppelschnittstellenvorrichtung zwischen zwei an den beiden externen Hardwareschnittstellen angeschlossenen Kommunikationspartnern übertragene Kommunikationsdaten.

In EP 2 983 088 A1 wird eine Brückeneinheit zur Übertragung eines Datenpakets zwischen einem Schnittstellengerät und einer Recheneinheit beschrieben. Die Brückeneinheit umfasst dabei einen ersten Port, welcher dazu eingerichtet ist ein Datenpaket zu senden bzw. zu empfangen, wobei der erste Port einen ersten Adressenbereich benutzt. Der zweite Port ist dazu eingerichtet, ein Datenpaket zu senden, bzw. zu empfangen, wobei vom zweiten Port ein zweiter Adressbereich verwendet wird. Einer der Ports ist mit dem Schnittstellengerät verbunden und der andere Port mit der Recheneinheit. Die Brückeneinrichtung umfasst weiterhin eine Steuereinrichtung, welche dazu ausgebildet ist ein Paket zwischen dem ersten Port und dem zweiten Port zu übertragen. Über die Steuereinheit können verschiedene Regeln für das Datenpaket umgesetzt werden. Eine Initialisierung des ersten Ports und des zweiten Ports erfolgt über die Recheneinheit.

Die Firma Microchip Technologies Inc. aus Chandler, AZ, USA, vertreibt unter der Bezeichnung MCP2515 einen Microchip zur Filterung von über einen CAN-Bus übermittelten Nachrichten, welcher gemäß der unter http://ww1.microchip.com/downloads/en/DeviceDoc/MCP2515-Stand-Alone-CAN-Controller-with-SPI-20001801J.pdf abrufbaren Spezifikation über eine SPI-Schnittstelle mit einem Mikrocontroller verbindbar ist.

DE 10 2012 017 339 A1 betrifft ein Rechnersystem mit wenigstens zwei CPUs, die jeweils eine PCIe-Bus-Hierarchie aufweisen, mittels derer Nachrichten, die jeweils eine Herkunftsadresse, eine Zieladresse und eine Nutzlast aufweisen, zwischen angeschlossenen Kommunikationseinrichtungen übertragbar sind. Die PCIe-Bus-Hierarchien sind mittels einer Brückeneinrichtung derart verbunden, dass Nachrichten zwischen an unterschiedlichen PCIe-Bus-Hierarchien angeschlossenen Kommunikationseinrichtungen austauschbar sind, wobei das Rechnersystem wenigstens eine Peripherieeinrichtung mit einer Kommunikationseinrichtung aufweist, die von den CPUs gemeinsam nutzbar ist, wobei die Brückeneinrichtung eine Übersetzungseinrichtung aufweist, welche zur Übersetzung der Zieladresse von Nachrichten ausgebildet ist, die von einer PCIe-Bus-Hierarchie in eine andere übertragen werden. In diesem Kontext wird auch vorgeschlagen, zwischen den Brückeneinrichtungen und den PCIe-Hierarchien Wächtereinrichtungen zur Überwachung der von der Brückeneinrichtung übermittelten Nachrichten anzuordnen. Zum Schutz von an die Brückeneinrichtung angeschlossenen PCIe-Bus-Hierarchien können Zieladressen und Herkunftsadressen ausgewertet werden, um gegebenenfalls Nachrichten zu verwerfen.

Dort werden also an zentralen Positionen im Datenverarbeitungssystem Wächtereinrichtungen vorgesehen, die insgesamt zu konfigurieren sind. Diese Lösung ist aufwändig und unflexibel, insbesondere, wenn die Wächtereinrichtungen auch dem Konfigurationszugriff weniger sicherheitskritischer Datenverarbeitungseinrichtungen ausgesetzt sind.

Der Erfindung liegt daher die Aufgabe zugrunde, eine Möglichkeit zum besseren, flexibleren und unabhängigeren Schutz von Datenverarbeitungseinrichtungen innerhalb eines Datenverarbeitungssystems einer Gesamtvorrichtung, insbesondere eines Kraftfahrzeugs, anzugeben.

Zur Lösung dieser Aufgabe ist erfindungsgemäß ein Verfahren nach Anspruch 1 vorgesehen. Ferner wird die Aufgabe durch eine Datenverarbeitungseinrichtung nach Anspruch 9 sowie ein Kraftfahrzeug nach Anspruch 10 gelöst.

Der Erfindung liegt mithin die Idee zugrunde, seitens der empfangenden, insbesondere als sicherheitskritisch bewerteten bzw. in einem Sicherheitsbereich liegenden Datenverarbeitungseinrichtung eine hardwarebasierte Firewall in Form eines Filtermittels zu realisieren, das seitens einer Schnittstelleneinheit, beispielsweise eines PCIe-Steuerchips, realisiert ist. Dabei können die Nutzdaten insbesondere auf das wenigstens eine Speichermittel wirkende Steuerbefehle umfassen, wobei das Filtermittel wenigstens auf die Steuersignale angewendet wird. Jedoch ist das hier beschriebene Vorgehen auch auf sonstige Nutzdaten in den Kommunikationsdaten anwendbar, da auch für sonstige Nutzdaten gelten kann, dass diese im Speicher einer Datenverarbeitungseinrichtung und/oder in einer Recheneinheit einer Datenverarbeitungseinrichtung Schaden anrichten können. Abhängig von der Konfigurationsinformation kann das Filtermittel die Zahl der verfügbaren Nutzdaten, insbesondere Steuersignale, die tatsächlich zu den relevanten Komponenten, insbesondere also Speichermittel und/oder Recheneinheit, weitergeleitet werden, auf das Notwendige und die Sicherheit sicherstellende Maß reduzieren. Auf diese Weise wird die Angriffsfläche über die Kommunikationsverbindung minimiert, ohne dass auf einen vollständig funktionalen Rückkanal verzichtet werden muss.

Die Konfiguration des Filtermittels erfolgt dabei vorteilhafterweise durch die Datenverarbeitungseinrichtung selber, wobei ein separater Konfigurationskanal innerhalb der Datenverarbeitungseinrichtung, insbesondere ausgehend von der Recheneinheit, und/oder ein bestehendes Konfigurationsinterface der Schnittstelleneinheit genutzt werden kann. Das bedeutet aber, dass jede Datenverarbeitungseinrichtung in einem Datenverarbeitungssystem selbst Kontrolle über die eingehenden und auszufilternden Nachrichten über die Kommunikationsverbindung hat. Im Gegensatz zu einer Ausgestaltung, in der Zugriff auf eine Wächtereinrichtung zentral Manipulationsmöglichkeiten im gesamten Datenverarbeitungssystem eröffnet, schützt die vorliegende Erfindung gegen eingehende Angriffe und verleiht ein Maximum an Autonomie an die Datenverarbeitungseinrichtung als Subsystem.

Mit anderen Worten bedeutet dies, dass unabhängig davon, ob Anteile des Datenverarbeitungssystems kompromittiert sind, die Datenverarbeitungseinrichtung ihre eigene Firewall in Form des Filtermittels nutzen kann. Es existiert keine Master-Einrichtung, die die Firewall-Konfigurationsinformation verändern könnte, denn nur die Datenverarbeitungseinrichtung selbst kann die Konfiguration verändern. Weiterhin gilt, dass jede Datenverarbeitungseinrichtung auf eingehende Angriffe reagieren kann und durch entsprechende Umkonfiguration des Filtermittels die Kommunikationsverbindung reduzieren oder gar gänzlich schließen kann.

Ein weiterer massiver Vorteil des erfindungsgemäß vorgesehenen Filtermittels ist die Tatsache, dass der Inhalt der Kommunikationsdaten, also die Nutzdaten (Payload), ebenso durch das Filtermittel beurteilt werden kann. Während die im Stand der Technik bekannten Ansätze als "Stateless Packet Inspection" bezeichnet werden können, kann die vorliegende Erfindung als "Stateful Packet Inspection" bezeichnet werden. Es wird mithin nicht bzw. nicht nur beurteilt, welche Herkunft, welches Ziel und welche Kommunikationsstrecke die Kommunikationsdaten genommen haben, sondern auch der Inhalt. Dabei muss im Übrigen nicht zwangsläufig unmittelbar auf die Nutzdaten zugegriffen werden, sondern es ist denkbar, dass bei einer paketbasierten Kommunikation im Header entsprechende Eigenschaften der Kommunikationsdaten enthalten sind, auf die das Zulassungskriterium zugreifen kann. Die wenigstens teilweise Ausgestaltung des Filtermittels in Hardware, insbesondere also die Integration in einen die Schnittstelleneinheit bildenden Chip, schränkt die Manipulationsmöglichkeiten weiter ein.

Insgesamt erlaubt die Filterung des Kommunikationsverkehrs innerhalb der Datenverarbeitungseinrichtung selbst, aber außerhalb der Recheneinheit und der Speichermittel, eine strenge Trennung in verteilten Systemen von Datenverarbeitungseinrichtungen. Das Filtermittel in der Schnittstelleneinheit, insbesondere also in einem externen Chip, erlaubt zudem die Nutzung einfacherer Restkomponenten, insbesondere Recheneinheiten, beispielsweise CPUs, in sicherheitskritischen Datenverarbeitungseinrichtungen, die den Kommunikationsstandard der Kommunikationsverbindung nutzen. Das Outsourcen des Filtermittels in die Schnittstelleneinheit erniedrigt also die Komplexität der Datenverarbeitungseinrichtung an sich. Der hier beschriebene, erfindungsgemäße Mechanismus kann auch in gemultiplexten/demultiplexten Kommunikationsverbindungen eingesetzt werden. Insbesondere muss eine eingesetzte Brückeneinrichtung keinerlei Information über die Filtervorgänge haben.

Erfindungsgemäß wird eine Kommunikationsverbindung nach dem Kommunikationsstandard PCI Express (PCle) verwendet. Eine PCIe-Kommunikationsverbindung stellt grundsätzlich eine paketbasierte Punkt-zu-Punkt-Verbindung dar, die, wie eingangs beschrieben, durch Brückeneinrichtungen auch zu mehreren Kommunikationspartnern genutzt werden kann.

In einer besonders bevorzugten Ausgestaltung der Erfindung kann vorgesehen sein, dass das Filtermittel in einer auf die gemäß einem in der Kommunikationsverbindung verwendeten Kommunikationsstandard für den physikalischen Transport formatierten Kommunikationsdaten wirkenden Kommunikationsschicht, insbesondere einer Transaktionsschicht bei PCI Express, angewendet wird. Auf diese Weise ist mithin hardwareunterstütztes Filtern innerhalb der Transaktionsschicht (Transaction Layer) möglich. Das bedeutet, die Filterung kann gezielt möglichst nah am physikalischen Empfang der Kommunikationsdaten platziert werden, um deren Einfluss auf die Datenverarbeitungseinrichtung, insbesondere die Speichermittel und/oder die Recheneinheit, zu minimieren. In der Transaktionsschicht haben die Daten noch das durch den Kommunikationsstandard, hier insbesondere PCI Express, definierte Übertragungsformat. Soll auf Inhalte, insbesondere also Nutzdaten, durch wenigstens eine Zulassungsbedingung direkt zugegriffen werden und sind die Nutzdaten verschlüsselt, wäre ein derartiges Filtermittel unmittelbar nach geeigneten Entschlüsselungsmitteln vorzusehen.

Wie bereits erwähnt, sieht eine zweckmäßige Ausgestaltung der Erfindung vor, dass ein als Teil eines Mikrochips, der die Schnittstelleneinheit bildet, realisiertes Filtermittel als das Filtermittel verwendet wird. Das Filtermittel kann also konkret hardwaretechnisch durch eine Modifikation eines entsprechenden Schnittstelleneinheit-Mikrochips realisiert werden, mithin seitens der Hardware fest in den Verarbeitungsablauf integriert werden. Insbesondere kann es sich hierbei um einen PCIe-Chip handeln.

Das Filtermittel ist bevorzugt ausschließlich durch die Datenverarbeitungseinrichtung selbst konfigurierbar, wie dargestellt, wobei konkret vorgesehen sein kann, dass das Filtermittel, insbesondere ausschließlich, durch die Recheneinheit konfiguriert wird. Die Recheneinheit, beispielsweise eine CPU, hat dabei also bevorzugt alleinigen Konfigurationszugang zu dem Filtermittel, was eine größtmögliche Autonomie und Flexibilität der Datenverarbeitungseinrichtung selbst sichert, nachdem beispielsweise auch auf Angriffe reagiert werden kann, indem die Zulassungsbedingungen verschärft werden oder die Kommunikationsverbindung gänzlich deaktiviert wird.

In einer konkreten Ausgestaltung kann vorgesehen sein, dass wenigstens eine der wenigstens einen Nutzdaten bewertenden Zulassungsbedingungen eine Minimallänge und/oder Maximallänge einer Nutzdateneinheit, insbesondere eines Steuerbefehls, und/oder eine Einschränkung der Funktionsart eines durch die Nutzdaten beschriebenen Steuerbefehls und/oder eine Einschränkung des zugreifbaren Speicherbereichs des wenigstens einen Speichermittels überprüft. Mithin ist eine Einschränkung der zulässigen Nutzdaten in den Kommunikationsdaten zunächst beispielsweise über die Länge einer Nutzdateneinheit, die beispielsweise in einen Speicherbereich des Speichermittels geschrieben werden soll, definierbar. So kann beispielsweise, je kleiner eine Nutzdateneinheit, beispielsweise ein Steuerbefehl, ist, angenommen werden, dass eine schädliche Nutzdateneinheit weniger Schaden in der Datenverarbeitungseinrichtung auszurichten vermag. In Kommunikationsstandard und/oder durch entsprechende Ausgestaltung der Filtermittel kann auch zwischen unterschiedlichen Funktionstypen bei durch die Nutzdaten beschriebenen Steuerbefehlen unterschieden werden, beispielsweise diese auf unterschiedliche Arten und Weisen klassifiziert werden, so dass eine besonders bevorzugte Ausgestaltung der Erfindung vorsieht, dass eine Zulassungsbedingung bestimmte Funktionsarten/Funktionsklassen ausschließt. Dies wiederum schließt bestimmte Arten des Zugriffs, insbesondere auf Speichermittel, in der Datenverarbeitungseinrichtung aus, beispielsweise Schreibzugriffe, Manipulationszugriffe und dergleichen. Schließlich kann in einer dritten konkreten Ausgestaltungsmöglichkeit vorgesehen sein, den Speicherbereich, den die Nutzdaten der Kommunikationsdaten nutzen dürfen, beispielsweise in den sie eingespeichert werden dürfen, zu beschränken. Häufig zielen Nutzdaten/Steuerbefehle durch ihre entsprechende Struktur auf die Nutzung bestimmter Speicherbereiche von Speichermitteln der Datenverarbeitungseinrichtung ab, welche gegebenenfalls besonders relevant für die sicherheitskritische Funktionalität der Datenverarbeitungseinrichtung sein können, weswegen derartige, besonders sicherheitskritische Bereiche beispielsweise über eine Zulassungsbedingung ausgeschlossen werden können. Eine besonders bevorzugte Ausführungsform ergibt sich, wenn Zulassungsbedingungen für alle diese Kriterien verwendet werden, da dann beispielsweise auch Umgehungslösungen wie Zerstückelung von Gesamt-Steuerbefehlen bei Größeneinschränkung und dergleichen vermieden werden können.

Zusätzlich zu den inhaltsbezogenen Zulassungsbedingungen können im Rahmen der vorliegenden Erfindung vorteilhaft auch weitere Zulassungsbedingungen verwendet werden, durch die eine die Kommunikationsverbindung und/oder den Kommunikationspartner beschreibende Kommunikationseigenschaft ausgewertet wird. Beispielsweise ist es bei dem Kommunikationsstandard PCI Express bekannt, den jeweiligen Kommunikationspartner innerhalb der Kommunikationsinformation genauso zu identifizieren wie die konkret genutzte Kommunikationsverbindung zu diesem Kommunikationspartner, falls mehrere Kommunikationsverbindungen eingesetzt werden. Auch diesbezüglich kann das Filtermittel also, wie grundsätzlich bekannt, Einschränkungen vorsehen.

In einer zweckmäßigen Weiterbildung kann vorgesehen sein, dass die Konfigurationsinformation ein Sicherheitslevel mit zugeordneten Zulassungsbedingungen und/oder Parametern der Zulassungsbedingungen beschreibt. Mithin können konkret vorgegebene Konfigurationsinformationen für verschiedene Sicherheitslevel verwendet werden, so dass das entsprechende Sicherheitslevel besonders einfach durch Konfigurationszugriff auf die Filtermittel innerhalb der Datenverarbeitungseinrichtung angepasst werden kann. Beispielsweise können 16 Sicherheitslevel vorgesehen werden, die sich mithin beispielsweise über 2 Byte beschreiben lassen, welche schrittweise Beschränkungen für die Kommunikationsdaten lockern.

Das erfindungsgemäße Vorgehen lässt sich mit besonderem Vorteil in einem Datenverarbeitungssystem eines Kraftfahrzeugs einsetzen, so dass erfindungsgemäß vorgesehen ist, dass die Datenverarbeitungseinrichtung einen Teil eines Kraftfahrzeugs bildet, insbesondere ein Steuergerät ist, und mit dem wenigstens einen Kommunikationspartner, der Teil eines Datenverarbeitungssystems des Kraftfahrzeugs ist, kommuniziert. Wie eingangs bereits erläutert, stellen moderne Kraftfahrzeuge ein konkretes Beispiel für komplexe Datenverarbeitungssysteme dar, in denen verschiedenste Sicherheitsstufen bzw. Sicherheitsbereiche definiert werden können, beispielsweise, was eher sicherheitskritische Steuergeräte (Fahrzeugführung, insbesondere vollständig automatische Fahrzeugführung, Sicherheitssysteme und dergleichen) und weniger sicherheitskritische Steuergeräte (Infotainment etc.) angeht. Hier bietet das erfindungsgemäße Vorgehen einen Mechanismus, der eine Hochgeschwindigkeitskommunikation, beispielsweise über PCI Express, mit einem Rückkanal erlaubt, dennoch jedoch Manipulationsmöglichkeiten von weniger sicherheitskritischen Steuergeräten ausgehend möglichst weitgehend verhindert.

Neben dem Verfahren betrifft die Erfindung auch eine Datenverarbeitungseinrichtung, insbesondere ein Steuergerät für ein Kraftfahrzeug, aufweisend eine Schnittstelleneinheit mit einem Filtermittel, wenigstens ein Speichermittel und eine Recheneinheit und ausgebildet zur Durchführung des erfindungsgemäßen Verfahrens. Schließlich betrifft die Erfindung auch ein Kraftfahrzeug mit einer solchen Datenverarbeitungseinrichtung. Sämtliche Ausführungen bezüglich des erfindungsgemäßen Verfahrens lassen sich analog auf die erfindungsgemäße Datenverarbeitungseinrichtung und das erfindungsgemäß Kraftfahrzeug übertragen, so dass auch mit diesen die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine erfindungsgemäße Datenverarbeitungseinrichtung,
- Fig. 2: einen Ablaufplan eines Ausführungsbeispiels des erfindungsgemäßen Verfahrens,
- Fig. 3: eine mögliche Definition von Sicherheitslevels, und
- Fig. 4: eine Prinzipskizze eines erfindungsgemäßen Kraftfahrzeugs.

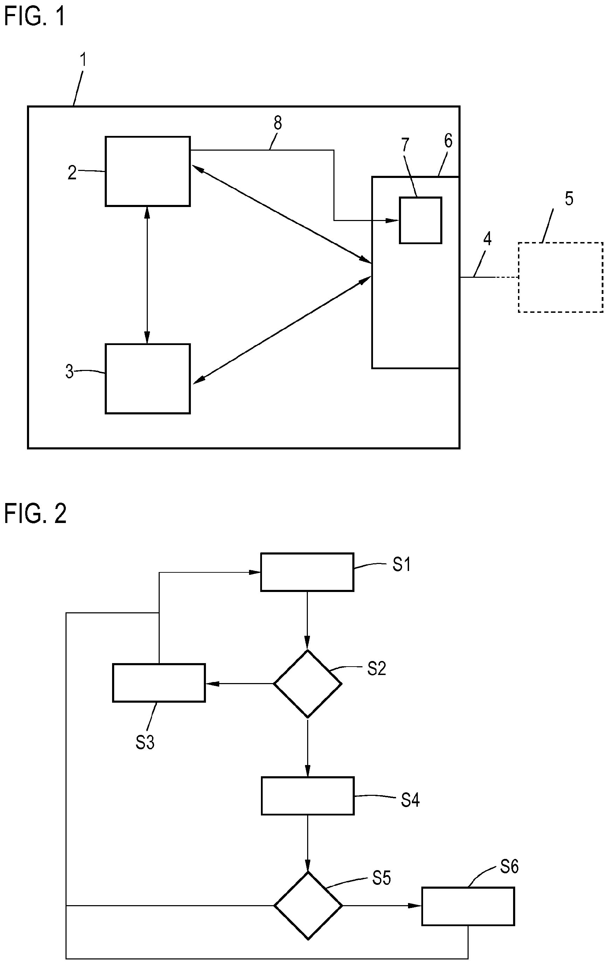

Fig. 1 zeigt eine Prinzipskizze einer erfindungsgemäßen Datenverarbeitungseinrichtung 1, die vorliegend, wie grundsätzlich bekannt, wenigstens eine Recheneinheit 2 und wenigstens ein Speichermittel 3 aufweist, wobei selbstverständlich wenigstens eines des wenigstens einen Speichermittels 3 auch innerhalb der Recheneinheit 2, welche beispielsweise auch als CPU ausgebildet sein kann, realisiert sein kann. Bei der Datenverarbeitungseinrichtung 1 handelt es sich vorliegend um ein Steuergerät eines Kraftfahrzeugs.

Um mit anderen Datenverarbeitungseinrichtungen des Kraftfahrzeugs, beispielsweise weiteren Steuergeräten und/oder sonstigen Datenverarbeitungseinrichtungen, beispielsweise Anzeigevorrichtungen, kommunizieren zu können, werden ausgehend von der Datenverarbeitungseinrichtung 1 Kommunikationsverbindungen gebildet. Wenigstens eine Kommunikationsverbindung 4 zu einem hier nur angedeuteten Kommunikationspartner 5 nutzt den PCI Express-Kommunikationsstandard (PCIe-Kommunikationsstandard) zur Hochgeschwindigkeits-Datenübertragung. Entsprechend ist eine Schnittstelleneinheit 6 der Datenverarbeitungseinrichtung 1 als ein PCIe-Mikrochip ausgebildet. In diese Schnittstelleneinheit 6 hardwaretechnisch integriert, das bedeutet, fest im entsprechenden Mikrochip vorgesehen, sind vorliegend nun Filtermittel 7, welche aufgrund einer Konfigurationsinformation eingehende Kommunikationsdaten gegen verschiedene Zulassungsbedingungen prüfen, wobei nur bei Erfüllung aller Zulassungsbedingungen die in den Kommunikationsdaten enthaltenen Nutzdaten auch tatsächlich an die weiteren Komponenten der Datenverarbeitungseinrichtung 1, hier die Recheneinheit 2 und das Speichermittel 3, weitergegeben werden. Wenigstens eine der Zulassungsbedingungen wertet dabei eine Eigenschaft der in den Kommunikationsdaten enthaltenen Nutzdaten aus, wobei sich weitere Zulassungsbedingungen auch auf den Kommunikationspartner 5 und/oder die Kommunikationsverbindung 4 selbst beziehen können. Bei dem Kommunikationspartner 5 kann es sich im Übrigen sowohl um einen sogenannten Endpoint als auch um eine zwischengeschaltete Schalteinrichtung, beispielsweise eine Brückeneinrichtung, einen Switch und/oder einen Mulitplexer/Demultiplexer, handeln.

Das Filtermittel 7 ist dabei lediglich von innerhalb der Datenverarbeitungseinrichtung 1 konfigurierbar, vorliegend ausschließlich durch die Recheneinheit 2. Hierfür kann ein entsprechender, getrennter Konfigurationskanal vorgesehen sein, es kann jedoch auch eine für Konfigurationszwecke ohnehin genutzte Kommunikationsschnittstelle der Schnittstelleneinheit 6 eingesetzt werden. Der Konfigurationszugriff wird in Fig. 1 durch einen Pfeil 8 angedeutet.

Fig. 2 erläutert als Ablaufplan ein Ausführungsbeispiel des erfindungsgemäßen Verfahrens, wie es in der Datenverarbeitungseinrichtung 1 ausgeführt werden kann, genauer. Dabei werden in einem Schritt S1, vorliegend als Datenpakete, Kommunikationsdaten empfangen, die Nutzdaten (Payload) sowie einen Header umfassen. Nachdem die physikalische Schicht (Physical Layer) und die Datenverbindungschicht (Datalink Layer) durchlaufen sind, gelangen die Kommunikationsdaten in die Transaktionsschicht (Transaction Layer), wo die Datenpakete (Transaction Layer Packets - TLP) auf das Filtermittel 7 treffen. Die entsprechende Filterung, das heißt die Überprüfung aller Zulassungsbedingungen für jedes eingehende Datenpaket, findet im Schritt S2 statt. Wird dabei festgestellt, dass wenigstens eine der Zulassungsbedingungen nicht erfüllt ist, wird das Datenpaket im Schritt S3 verworfen und für das nächste Datenpaket wieder zum Schritt S1 zurückgekehrt. Sind jedoch alle Zulassungsbedingungen erfüllt, werden in einem Schritt S4 die Kommunikationsdaten wie üblich in der Schnittstelleneinheit 6 weiterverarbeitet und an die weiteren Komponenten 2, 3 der Datenverarbeitungseinrichtung 1 weitergegeben.

In einem optionalen Schritt S5 kann innerhalb der Recheneinheit 2 ständig überwacht werden, ob ein Angriff vorliegt oder detektiert werden kann. Ist derartiges der Fall, kann in einem Schritt S6 eine Umkonfigurierung, Pfeil 8, der Filtermittel 7 stattfinden, beispielsweise die Zulassungsbedingungen verschärft werden oder die Kommunikationsverbindung 4 gänzlich deaktiviert werden.

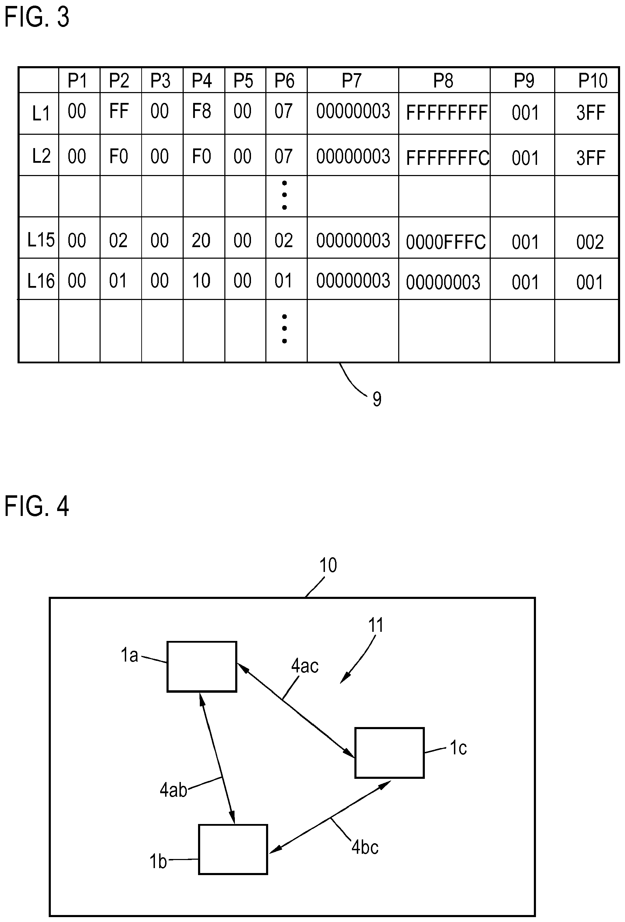

Im vorliegenden Ausführungsbeispiel sind hierfür bestimmte Sicherheitslevel mit zugeordneten Konfigurationsinformationen, die die Zulassungsbedingungen beschreiben, definiert. Dies wird durch die Tabelle 9 der Fig. 3 näher dargestellt. Jeder Zeile entspricht dabei ein Sicherheitslevel L1, L2, .... P1-P10 sind dabei Parameter von Zulassungsbedingungen. P1 und P2 beschreiben dabei die zulässigen laufenden Nummern von Kommunikationsverbindungen, P3 und P4 zulässige laufende Nummern von Kommunikationspartnern. P5-P10 beziehen sich auf inhaltsbezogene Zulassungsbedingungen. P5 und P6 beschreiben den Bereich zulässiger Funktionsarten (Funktionsklassen), P7 und P8 zulässige Speicherbereiche des wenigstens einen Speichermittels 3, in die Daten geschrieben werden dürfen, und P9 und P10 die Minimallänge und die Maximallänge von Nutzdateneinheiten. Nutzdateneinheiten können dabei Steuerbefehlen entsprechen, jedoch sind auch andere Nutzdaten durch das Filtermittel 7 behandelbar.

Wie zu erkennen ist, kann beispielsweise das Sicherheitslevel L1 keinerlei Beschränkungen in der Kommunikation mit sich bringen, während das Sicherheitslevel L16 lediglich Signale auf der ersten Kommunikationsverbindung für den Kommunikationspartner Nr. 16 und die erste Funktionsklasse erlaubt. Der Zielspeicherbereich und die Datenmenge sind ebenso klar definiert und beschränkt.

Ein geeignetes Sicherheitslevel L1, L2, ... kann, wie beschrieben, seitens der Recheneinheit 2 auch dynamisch gewählt werden.

Fig. 4 zeigt schließlich eine Prinzipskizze eines erfindungsgemäßen Kraftfahrzeugs 10. Dieses weist ein Datenverarbeitungssystem 11 auf, welches mehrere erfindungsgemäße Datenverarbeitungseinrichtungen 1A, 1B und 1C aufweist, von denen lediglich beispielhaft und aus Gründen der einfachen Darstellung nur 3 gezeigt sind. Zwischen den Datenverarbeitungseinrichtungen 1a, 1b und 1c bestehen jeweils Kommunikationsverbindungen 4ab, 4ac, 4bc, die nach dem Kommunikationsstandard PCI Express betrieben werden. Innerhalb der Datenverarbeitungseinrichtungen 1a, 1b und 1c sind jeweils erfindungsgemäß betriebene Filtermittel 7 vorhanden, so dass jede Datenverarbeitungseinrichtung 1a, 1b und 1c autonom und mit erhöhter Sicherheit, insbesondere also unabhängig von Beeinträchtigungen anderer Teile des Datenverarbeitungssystems 11, für ihre eigene Sicherheit sorgen kann.

## Patentansprüche

1. Verfahren zum Filtern von über eine Kommunikationsverbindung (4), die Zugriff auf wenigstens ein Speichermittel (3) einer empfangenden, wenigstens eine Recheneinheit (2) aufweisenden Datenverarbeitungseinrichtung (1, 1a, 1b, 1c) gewährt, von einem Kommunikationspartner (5) eingehenden Kommunikationsdaten in der Datenverarbeitungseinrichtung (1, 1a, 1b, 1c), wobei die Datenverarbeitungseinrichtung (1, 1a, 1b, 1c) einen Teil eines mehrere derartige Datenverarbeitungseinrichtungen (1, 1a, 1b, 1c) umfassenden Datenverarbeitungssystems eines Kraftfahrzeugs (10) bildet und mit dem wenigstens einen weiteren Kommunikationspartner (5), der Teil des Datenverarbeitungssystems (11) des Kraftfahrzeugs (10) ist, kommuniziert, wobei in einer die Kommunikationsdaten entgegennehmenden Schnittstelleneinheit (6) der Datenverarbeitungseinrichtung (1, 1a, 1b, 1c) mittels eines wenigstens teilweise als Hardware ausgeführten Filtermittels (7) gemäß einer wenigstens eine Zulassungsbedingung, die wenigstens eine Eigenschaft von in den Kommunikationsdaten enthaltenen Nutzdaten bewertet, enthaltenden, datenverarbeitungseinrichtungsseitig vorgegebenen Konfigurationsinformation nur die wenigstens eine Zulassungsbedingung erfüllende Kommunikationsdaten von der Schnittstelleneinheit (6) zu wenigstens einer weiteren Komponente der Datenverarbeitungseinrichtung (1, 1a, 1b, 1c) weitergeleitet werden, wobei die Kommunikationsverbindung (4) eine paketbasierte Punkt-zu-Punkt-Verbindung nach dem Kommunikationsstandard PCI Express ist.

2. Verfahren nach Anspruch 1,
**dadurch gekennzeichnet,**
**dass** das Filtermittel (7) in einer auf die gemäß einem in der Kommunikationsverbindung (4) verwendeten Kommunikationsstandard für den physikalischen Transport formatierten Kommunikationsdaten wirkenden Kommunikationsschicht, nämlich einer Transaktionsschicht bei PCI Express, angewendet wird.

3. Verfahren nach Anspruch 1 oder 2,
**dadurch gekennzeichnet,**
**dass** ein als Teil eines Mikrochips, der die Schnittstelleneinheit (6) bildet, realisiertes Filtermittel (7) verwendet wird.

4. Verfahren nach einem der vorangehenden Ansprüche,
**dadurch gekennzeichnet,**
**dass** das Filtermittel (7), insbesondere ausschließlich, durch die Recheneinheit (2) konfiguriert wird.

5. Verfahren nach einem der vorangehenden Ansprüche,
**dadurch gekennzeichnet,**
**dass** wenigstens eine der wenigstens einen Nutzdaten bewertenden Zulassungsbedingung eine Minimallänge und/oder Maximallänge einer Nutzdateneinheit, insbesondere eines Steuerbefehls, und/oder eine Einschränkung der Funktionsart eines durch die Nutzdaten beschriebenen Steuerbefehls und/oder eine Einschränkung des zugreifbaren Speicherbereichs des wenigstens einen Speichermittels (3) überprüft.

6. Verfahren nach einem der vorangehenden Ansprüche,
**dadurch gekennzeichnet,**
**dass** als weitere Zulassungsbedingung eine die Kommunikationsverbindung (4) und/oder den Kommunikationspartner (5) bewertende Zulassungsbedingung überprüft wird.

7. Verfahren nach einem der vorangehenden Ansprüche,
**dadurch gekennzeichnet,**
**dass** die Konfigurationsinformation ein Sicherheitslevel mit zugeordneten Zulassungsbedingungen und/oder Parametern der Zulassungsbedingungen beschreibt.

8. Verfahren nach einem der vorangehenden Ansprüche,
**dadurch gekennzeichnet,**
**dass** die Datenverarbeitungseinrichtung (1, 1a, 1b, 1c) ein Steuergerät ist.

9. Datenverarbeitungseinrichtung (1, 1a, 1b, 1c), insbesondere Steuergerät für ein Kraftfahrzeug (10), aufweisend eine Schnittstelleneinheit (6) mit einem Filtermittel (7), wenigstens ein Speichermittel (3) und eine Recheneinheit (2) und ausgebildet zur Durchführung eines Verfahrens nach einem der vorangehenden Ansprüche.

10. Kraftfahrzeug (10) mit einer Datenverarbeitungseinrichtung (1, 1a, 1b, 1c) nach Anspruch 9.

## Claims

1. Method for filtering communication data arriving from a communication partner (5) via a communication connection (4), which ensures access to at least one memory means (3) of a receiving data processing device (1, 1a, 1b, 1c), which has at least one processing unit (2), wherein the data processing device (1, 1a, 1b, 1c) forms part of a data processing system of a motor vehicle (10) comprising a plurality of such data processing devices (1, 1a, 1b, 1c) and with which at least one further communication partner (5) that is part of the data processing system (11) of the motor vehicle (10) communicates, wherein in an interface unit (6) of the data processing device (1, 1a, 1b, 1c) that accepts the communication data, by means of a filter means (7) that is at least partially executed as hardware, in accordance with a configuration information that contains at least one authorisation condition, which evaluates at least one property of payload data contained in the communication data, and which is specified on the data processing device side, only the communication data that satisfies the at least one authorisation condition is forwarded from the interface unit (6) to at least one further component of the data processing device (1, 1a, 1b, 1c), wherein the communication connection (4) is a packet-based point-to-point connection according to the communication standard PCI Express.

2. Method according to claim 1,
**characterised in that**
the filter means (7) is applied in a communication layer, namely a transaction layer in PCI Express, which acts on the communication data formatted according to a communication standard used in the communication link (4) for physical transport.

3. Method according to claim 1 or 2,
**characterised in that**
a filter means (7) is used that is implemented as part of a microchip, which forms the interface unit (6).

4. Method according to any one of the preceding claims,
**characterised in that**
the filter means (7) is configured, in particular exclusively, by the processing unit (2).

5. Method according to any one of the preceding claims,
**characterised in that**
at least one authorisation condition that evaluates at least one payload data checks a minimum length and/or maximum length of a payload data unit, in particular of a control command, and/or a restriction of the type of function of a control command described by the payload data and/or a restriction of the accessible memory area of the at least one memory means (3).

6. Method according to any one of the preceding claims,
**characterised in that**
as a further authorisation condition, an authorisation condition that evaluates the communication link (4) and/or the communication partner (5) is checked.

7. Method according to any one of the preceding claims,
**characterised in that**
the configuration information describes a security level with associated authorisation conditions and/or parameters of the authorisation conditions.

8. Method according to any one of the preceding claims,
**characterised in that**
the data processing device (1a, 1b, 1c) is a control unit.

9. Data processing device (1, 1a, 1b, 1c), in particular a control unit for a motor vehicle (10), having an interface unit (6) comprising a filter means (7), at least one memory means (3) and a processor unit (2), and configured for carrying out a method according to any one of the preceding claims.

10. Motor vehicle (10) comprising a data processing device (1, 1a, 1b, 1c) according to claim 9.

## Revendications

1. Procédé de filtrage, au sein d'un dispositif de traitement de données (1, la, 1b, 1c) récepteur présentant au moins une unité de calcul (2), de données de communication entrantes d'un partenaire de communication (5) au moyen d'une liaison de communication (4) donnant accès à au moins un moyen de stockage (3) du dispositif de traitement de données (1, la, 1b, 1c), dans lequel le dispositif de traitement de données (1, la, 1b, 1c) fait partie d'un système de traitement de données d'un véhicule à moteur (10) comprenant plusieurs dispositifs de traitement de données (1, la, 1b, 1c) de ce type et communique avec au moins un autre partenaire de communication (5) faisant partie du système de traitement de données (11) du véhicule à moteur (10), dans lequel, au sein d'une unité d'interface (6), prenant en charge les données de communication, du dispositif de traitement de données (1, la, 1b, 1c), seules les données de communication satisfaisant au moins une condition d'autorisation sont transmises par l'unité d'interface (6) vers au moins un autre composant du dispositif de traitement de données (1, la, 1b, 1c) grâce à un moyen de filtrage (7) mis en oeuvre au moins partiellement sous une forme physique, en fonction d'informations de configuration prédéfinies côté dispositif de traitement de données et contenant au moins une condition d'autorisation qui évalue au moins une propriété de données utiles contenues dans les données de communication, dans lequel la liaison de communication (4) est une liaison point à point par paquets selon la norme de communication PCI Express.

2. Procédé selon la revendication 1,
**caractérisé en ce que**
le moyen de filtrage (7) est appliqué dans une couche de communication, à savoir une couche de transaction dans le cas de PCI Express, agissant sur les données de communication formatées pour le transport physique conformément à une norme de communication utilisée au sein de la liaison de communication (4).

3. Procédé selon la revendication 1 ou 2,
**caractérisé en ce qu'**
un moyen de filtrage (7) réalisé en tant que partie d'une micropuce formant l'unité d'interface (6) est utilisé.

4. Procédé selon l'une quelconque des revendications précédentes,
**caractérisé en ce que**
le moyen de filtrage (7) est configuré, en particulier exclusivement, grâce à l'unité de calcul (2).

5. Procédé selon l'une quelconque des revendications précédentes,
**caractérisé en ce qu'**
au moins une condition d'autorisation évaluant la ou les donnée(s) utile(s) vérifie une longueur minimale et/ou une longueur maximale d'une unité de données utiles, en particulier une instruction de commande, et/ou une restriction du type de fonction d'une instruction de commande décrite par les données utiles et/ou une restriction de la zone de stockage accessible du au moins un moyen de stockage (3).

6. Procédé selon l'une quelconque des revendications précédentes,
**caractérisé en ce qu'**
une condition d'autorisation évaluant la liaison de communication (4) et/ou le partenaire de communication (5) est vérifiée en tant que condition d'autorisation supplémentaire.

7. Procédé selon l'une quelconque des revendications précédentes,
**caractérisé en ce que**
les informations de configuration décrivent un niveau de sécurité avec des conditions d'autorisation associées et/ou des paramètres des conditions d'autorisation.

8. Procédé selon l'une quelconque des revendications précédentes,
**caractérisé en ce que**
le dispositif de traitement de données (1, la, 1b, 1c) est un appareil de commande.

9. Dispositif de traitement de données (1, la, 1b, 1c), en particulier appareil de commande destiné à un véhicule à moteur (10), présentant une unité d'interface (6) avec un moyen de filtrage (7), au moins un moyen de stockage (3) et une unité de calcul (2) et conçu pour mettre en oeuvre un procédé selon l'une quelconque des revendications précédentes.

10. Véhicule à moteur (10) avec un dispositif de traitement de données (1, la, 1b, 1c) selon la revendication 9.
